# FASCICULE DE BREVET EUROPEEN

(11) **EP 0 664 762 B1**
(45) Date de publication et mention de la délivrance du brevet: **20.03.1996**
(21) Numéro de dépôt: 93924102.2
(22) Date de dépôt: 21.10.1993
(51) Int. Cl.: B65G 15/00, B65G 15/30, B65G 45/22

(54) **PROCEDE DE TRANSPORT ULTRAPROPRE**
ÄUSSERST SAUBERES TRANSPORTVERFAHREN
ULTRA-CLEAN TRANSPORTATION METHOD

(30) Priorité: 22.10.1992 FR 9212659
(43) Date de publication de la demande: 02.08.1995
(73) Titulaire: UNIR (ULTRA PROPRE NUTRITION INDUSTRIE RECHERCHE), Association Loi de 1901, F-75007 Paris (FR); PROTIAL S.A, F-49071 Beaucouze (FR)
(72) Inventeur: PIRIOU, Jean-Pierre, F-49300 Cholet (FR); HERMANT, Jean-Jacques, F-49100 Angers (FR); ROUSSEL, Hervé, F-49080 Bouchemaine (FR)
(74) Mandataire: Dawidowicz, Armand
(86) Numéro de dépôt international: FR9301036
(87) Numéro de publication internationale: WO9408874

(56) Documents cités:
- DE-C- 64 720
- FR-A- 2 521 535
- GB-A- 1 297 917
- US-A- 4 960 200

## Description

La présente invention concerne un procédé de transport ultrapropre en continu de produits d'un point P à un point P' à l'intérieur d'une zone maîtrisée sur le plan bactériologique au moyen d'un convoyeur, ainsi que l'installation nécessaire à la mise en oeuvre du procédé.

Certains domaines de l'industrie tels que notamment le domaine de l'industrie agro-alimentaire, exigent aujourd'hui l'installation de postes de travail disposés en atmosphère microfiltrée de manière à éviter toute contamination microbiologique des produits. Ces nouvelles exigences se traduisent par des postes de travail disposés à distance et reliés entre eux au moyen d'un tunnel ou d'une enceinte à atmosphère contrôlée sur le plan bactériologique, de manière à permettre le déplacement des produits ou de contenants d'un point P à un point P' en absence de toute contamination d'origine microbienne. Cependant, ces dispositifs présentent encore un certain nombre d'inconvénients, notamment du fait que les produits sont transportés sur un convoyeur tel qu'une bande transporteuse ou un tapis classique qui, généralement n'a fait l'objet d'aucune décontamination en dehors de nettoyages et désinfections périodiques. Il arrive malgré tout dans certains cas que ces tapis soient, au cours de leur phase de retour vers le point de dépose des produits, lavés puis séchés de manière à avoir des tapis propres mais qui ne sont pas stériles ou proches de la stérilité. Un deuxième procédé pour pallier cet inconvénient de la contamination des produits par le convoyeur consiste à envelopper les produits avec une enveloppe externe qui constitue, par exemple, une barrière imperméable au gaz de manière à protéger le produit de toute contamination. Bien évidemment ce type de procédé est onéreux et limite les manipulations du produit.

Le but de la présente invention est donc de proposer un procédé de transport ultrapropre ainsi que l'installation mettant en oeuvre ce procédé, l'installation et le procédé permettant de transporter des produits ou des contenants d'un point P à un point P' à l'aide d'un convoyeur stérile ou quasiment stérile.

L'invention concerne à cet effet un procédé de transport ultrapropre en continu de produits et/ou de contenants d'un point P à un point P' à l'intérieur d'une zone maîtrisée sur le plan bactériologique au moyen d'un convoyeur, caractérisé en ce qu'on recouvre en continu en amont du point P la surface réceptrice du convoyeur d'un revêtement solide dont la face destinée à venir en contact avec les produits et/ou les contenants est stérile ou quasiment stérile, on dépose au point P à l'intérieur de la zone maîtrisée bactériologiquement les produits et/ou les contenants à transporter sur ledit revêtement et on récupère au point P' à l'intérieur de ladite zone les produits et/ou les contenants transportés.

Selon une forme de mise en oeuvre, on élimine, on récupère ou on recycle en aval du point P' le revêtement de la surface réceptrice du convoyeur, par des moyens mécaniques, chimiques, thermiques ou autres.

Ce revêtement formant film peut être soit un revêtement multicouches dont au moins une des interfaces entre deux couches quelconques contigües est stérile ou quasiment stérile, soit un revêtement constitué d'une solution filmogène stérilisable.

L'invention concerne en outre une installation ultrapropre caractérisée en ce qu'elle comporte un convoyeur pour le transport de produits ou de contenants d'un point P à un point P', une zone à atmosphère maîtrisée sur le plan bactériologique disposée au moins sur la portion PP', des moyens de dépôt d'un revêtement solide stérile ou quasiment stérile disposés en amont du point P, optionnellement des moyens de récupération dudit revêtement disposés en aval du point P', et des moyens de dépose et de récupération des produits et/ou des contenants à transporter sur ledit revêtement.

D'autres caractéristiques et avantages de l'invention apparaîtront encore à la lecture de la description qui suit et des dessins joints, lesquels description et dessins sont donnés surtout à titre d'exemples. Dans ces dessins :
La figure 1 représente un schéma simplifié d'une installation conforme à l'invention utilisant un revêtement constitué d'une matière ou d'une solution filmogène stérilisable; et
la figure 2 représente un schéma simplifié d'une autre installation conforme à l'invention, dans laquelle le revêtement est un film multicouches fabriqué dans des conditions stériles ou proches de la stérilité.

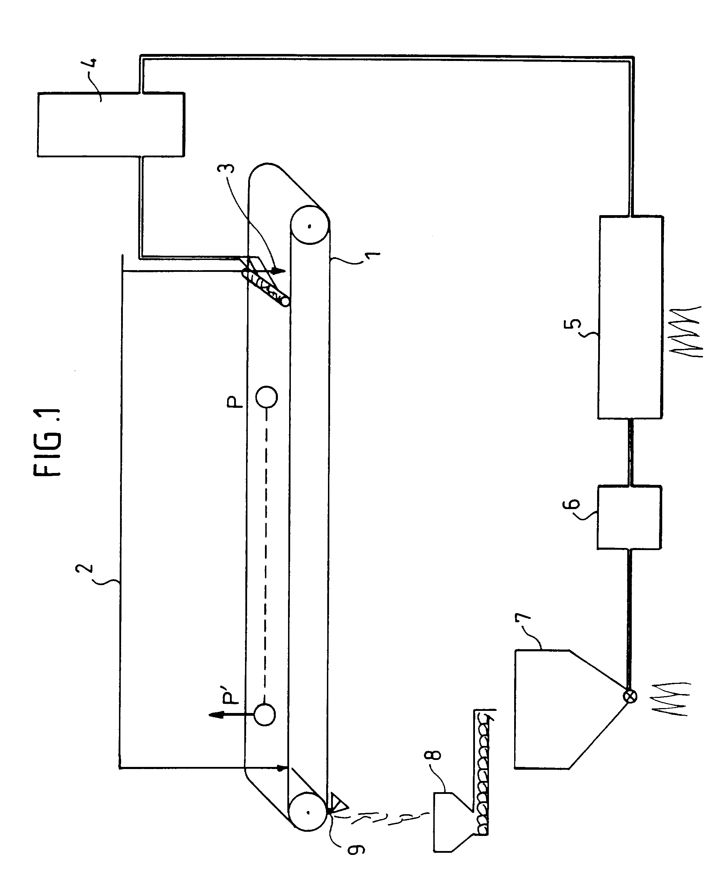

Conformément à la figure 1, la mise en oeuvre du procédé nécessite de disposer d'un convoyeur tel qu'une bande transporteuse 1, de préférence réfrigérée, qui traverse une zone 2 maîtrisée bactériologiquement. Cette zone peut, à titre d'exemple, être constituée par une enceinte ou un tunnel à flux laminaires. A l'intérieur de cette zone, il est défini une portion P P', le point P correspondant à l'emplacement de dépôt du produit (ou du contenant) sur la surface réceptrice du convoyeur, le point P' correspondant à la récupération dudit produit de la surface réceptrice du tapis du convoyeur. Ces produits peuvent être de tout type, y compris alimentaires et peuvent être libres ou disposés dans des contenants. On entend par "produits" également les contenants eux-mêmes, vides ou pleins.

En amont du point P ou au point P, il est défini un point désigné par 3 dans la figure 1 qui désigne le point de départ de pose du revêtement. Ce revêtement peut, conformément à la figure 1, être constitué par une solution filmogène, préparée dans des conditions stériles ou proches de la stérilité qui se solidifie rapidement et peut, quasiment de manière instantanée à compter du moment où elle est déposée sur la surface réceptrice du convoyeur, durcir de manière à former un film. A titre d'exemples de matières ou de solutions filmogènes, on peut citer la glace, les cires microcristallines, la méthylcellulose et ses dérivés, les protéines alimentaires, etc. Pour obtenir la mise en forme de cette solution sous forme d'un film, il est possible de déposer la solution liquide sur la bande transporteuse juste à l'entrée de la zone 2 à atmosphère maîtrisée bactériologiquement et de faire passer ladite solution sous un rouleau de manière à obtenir une épaisseur de solution homogène. Le dépôt peut être effectué au moyen d'une pompe et d'une filière plate.

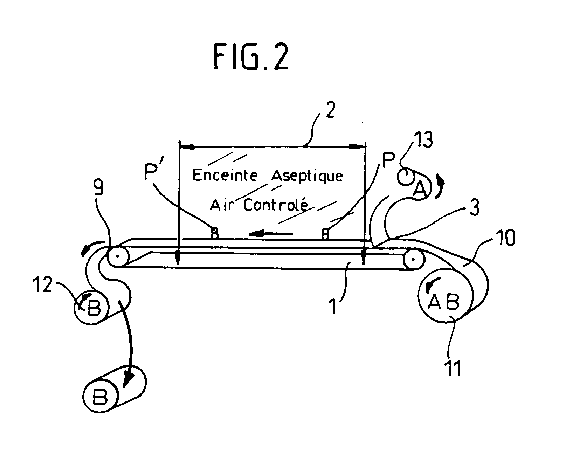

Lorsque le revêtement a dépassé le point P', il est généralement récupéré en un emplacement désigné par 9 dans les figures 1 et 2. Selon le type de revêtement utilisé, les moyens d'élimination et de récupération dudit revêtement seront différents. Dans le cas d'une matière ou d'une solution filmogène stérilisable, le film est de préférence récupéré conformément à la figure 1 par pelage, grattage ou simple séparation de la surface réceptrice des produits du convoyeur, puis découpé ou broyé dans un appareil désigné par 8 dans la figure 1 avant d'être refluidisé ou fondu dans un bac désigné par 7 dans la figure 1, puis filtré conformément à l'étape 6 de la figure 1 avant d'être stérilisé, conformément à l'étape 5 de la figure 1, pour de nouveau former une solution filmogène stérilisable qui, dans une étape ultérieure, sera redéposée sur la surface réceptrice du convoyeur. Dans ce cas, il est possible de fonctionner en circuit fermé et de déposer le revêtement en continu sans qu'il soit nécessaire d'utiliser une grande quantité de matière.

Dans un autre mode de réalisation conforme à la figure 2, le revêtement se présente, à l'origine, sous forme d'un revêtement solide tel qu'un film multicouches, dont au moins une des interfaces entre deux couches quelconques contigües est stérile ou quasiment stérile. Ainsi, dans le cas d'un film à deux couches tel que représenté dans la figure 2, lorsque ledit film est déposé au point 3 à partir d'une bobine 11, la couche disposée au-dessus de l'interface stérile ou quasiment stérile est éliminée et récupérée sur la bobine 13, alors que l'autre couche demeure en position sur la surface réceptrice des produits du convoyeur et sera éliminée en 9 par reprise dudit film sur une bobine 12 qui pourra à son tour être convoyée à une structure de retraitement pour récupérer l'ensemble de la matière.

On peut, dans un autre mode de réalisation de l'invention, supprimer l'étape de récupération d'une partie du film sur le rouleau 12 au point désigné par 9. Cette élimination ne peut se faire qu'à partir du moment où on dispose d'un film multicouches présentant plusieurs interfaces stériles ou quasiment stériles, de telle sorte qu'en amont du point P, au point désigné par 3 dans la figure 2, on élimine l'élément du revêtement disposé entre l'interface stérile et l'interface qui, à un instant t, a été stérile et a déjà été utilisée lors d'un passage précédent sur la portion P P'.

Il est également possible d'envisager une élimination globale après plusieurs tours de bande transporteuse.

La zone 2, aseptique ou maîtrisée sur le plan bactériologique, peut être constituée par une enceinte ou un tunnel dont l'atmosphère est contrôlée ou microfiltrée. Ce type d'enceinte ou de tunnel est parfaitement connu par l'homme du métier. En ce qui concerne le convoyeur 1, il peut être constitué par une bande transporteuse telle que représentée dans les figures 1 et 2, réfrigérée ou non, ou par tout autre moyen de transport en continu. Grâce à ce procédé et à l'installation mettant en oeuvre ce procédé, on évite toute contamination au cours du transport des marchandises ou des produits ou de leurs contenants d'un point P à un point P'.

## Revendications

1. Procédé de transport ultrapropre en continu de produits et/ou de contenants d'un point P à un point P' à l'intérieur d'une zone maîtrisée sur le plan bactériologique au moyen d'un convoyeur,
caractérisé en ce qu'on recouvre en continu en amont du point P la surface réceptrice du convoyeur d'un revêtement solide dont la face destinée à venir en contact avec les produits et/ou les contenants est stérile ou quasiment stérile, en ce qu'on dépose au point P à l'intérieur de la zone maîtrisée bactériologiquement les produits et/ou les contenants à transporter sur ledit revêtement et on récupère au point P' à l'intérieur de ladite zone les produits et/ou les contenants transportés.

2. Procédé selon la revendication 1,
caractérisé en ce qu'on élimine, on récupère ou on recycle en aval du point P' le revêtement de la surface réceptrice du convoyeur par des moyens mécaniques, chimiques, thermiques ou autres.

3. Procédé selon l'une des revendications 1 et 2,
caractérisé en ce qu'on recouvre la surface réceptrice du convoyeur d'un revêtement multicouche dont au moins une des interfaces entre deux couches quelconques contigües est stérile ou quasiment stérile.

4. Procédé selon l'une des revendications 1 et 2,
caractérisé en ce qu'on recouvre la surface de réception des produits du convoyeur d'un revêtement formant film obtenu par solidification d'une matière ou d'une solution filmogène préparée et déposée dans des conditions stériles ou proches de la stérilité.

5. Procédé selon l'une des revendications 1, 2 et 4,
caractérisé en ce qu'on traite le revêtement éliminé en aval du point P' pour le réappliquer en amont du point P.

6. Procédé selon la revendication 5,
caractérisé en ce que ce traitement inclut des étapes de découpe ou broyage, de fonte ou refluidisation, de filtration et de stérilisation pour permettre le passage de l'état solide à l'état liquide du revêtement et sa décontamination.

7. Procédé selon l'une des revendications 1, 2, et 3,
caractérisé en ce qu'on récupère la partie du revêtement disposée au-dessus de l'interface stérile ou quasiment stérile du revêtement multicouche en amont du point P.

8. Installation pour la mise en oeuvre du procédé conforme aux revendications 1 à 7,
caractérisée en ce qu'elle comporte un convoyeur (1) pour le transport de produits et/ou de contenants d'un point P à un point P', une zone (2) à atmosphère maîtrisée bactériologiquement disposée au moins sur la portion PP', des moyens (11) de dépôt d'un revêtement disposés en amont du point P, optionnellement des moyens de récupération (13) dudit revêtement disposés en aval du point P', et des moyens de dépose et de récupération des produits et/ou des contenants à transporter sur ledit revêtement.

9. Installation selon la revendication 8,
caractérisée en ce que le revêtement est une solution filmogène stérilisable et en ce que les moyens de dépôt sont constitués par une pompe et une filière plate.

10. Installation selon la revendication 9,
caractérisée en ce que les moyens de récupération en aval du point P' sont constitués par des moyens de pelage, de grattage ou de séparation.

11. Installation selon la revendication 8,
caractérisée en ce que les moyens de récupération du revêtement formé d'un film multicouche à interface stérile ou quasiment stérile comprennent un rouleau (13) disposé en amont du point P qui récupère la partie du revêtement située au-dessus de l'interface stérile ou quasiment stérile et éventuellement un rouleau (12) disposé en aval du point P' qui récupère la partie du revêtement située entre l'interface stérile ou quasiment stérile et la face réceptrice du convoyeur (1).

## Patentansprüche

1. Verfahren zum ultrasauberen, fortgesetzten Transport von Produkten und/oder Behältern von einem Punkt P zu einem Punkt P' im Inneren einer in bakteriologischer Hinsicht kontrollierten Zone mittels eines Fördermittels,
**dadurch gekennzeichnet**, daß die Aufnahmefläche des Fördermittels in Transportrichtung vor dem Punkt P fortlaufend mit einer festen Beschichtung überzogen wird, deren für den Kontakt mit den Produkten und/oder den Behältern bestimmte Seite steril oder beinahe steril ist, daß die zu transportierenden Produkte und/oder Behälter an dem Punkt P im Inneren der bakteriologisch kontrollierten Zone auf die Beschichtung abgesetzt werden und daß die transportierten Produkte und/oder Behälter an dem Punkt P' im Inneren der Zone wieder abgenommen werden.

2. Verfahren nach Anspruch 1, **dadurch gekennzeichnet,** daß die Beschichtung der Aufnahmefläche des Fördermittels in Transportrichtung hinter dem Punkt P' durch mechanische, chemische, thermische oder andere Mittel entfernt, wiedergewonnen oder recycelt wird.

3. Verfahren nach einem der Ansprüche 1 und 2, **dadurch gekennzeichnet**, daß die Aufnahmefläche des Fördermittels mit einer mehrschichtigen Beschichtung überzogen wird, bei der wenigstens eine der Trennungsflächen zwischen zwei benachbarten Schichten steril oder beinahe steril ist.

4. Verfahren nach einem der Ansprüche 1 und 2, **dadurch gekennzeichnet**, daß die Produktaufnahmefläche des Fördermittels mit einer Beschichtung überzogen wird, die einen Film bildet, der durch Verfestigung eines filmbildenden Materials oder einer filmbildenden Lösung erhalten wird, das bzw. die unter sterilen oder der Sterilität nahen Bedingungen vorbereitet und aufgetragen wird.

5. Verfahren nach einem der Ansprüche 1, 2 und 4, **dadurch gekennzeichnet**, daß die in Transportrichtung hinter dem Punkt P' entfernte Beschichtung behandelt wird, um sie in Transportrichtung vor dem Punkt P wieder aufzubringen.

6. Verfahren nach Anspruch 5, **dadurch gekennzeichnet**, daß die Behandlung Verfahrensschritte des Schneidens oder Zerkleinerns, des Schmelzens oder der Fluidisation, der Filterung und der Sterilisation umfaßt, um den Übergang der Beschichtung vom festen Zustand in den flüssigen Zustand und ihre Dekontaminierung zu ermöglichen.

7. Verfahren nach einem der Ansprüche 1, 2 und 3, **dadurch gekennzeichnet**, daß der Teil der Beschichtung, der oben auf der sterilen oder beinahe sterilen Trennungsfläche der mehrschichtigen Beschichtung angeordnet ist, in Transportrichtung vor dem Punkt P wiedergewonnen wird.

8. Anlage zur Durchführung des Verfahrens nach einem der Ansprüche 1 bis 7, **dadurch gekennzeichnet**, daß die Anlage aufweist ein Fördermittel (1) für den Transport von Produkten und/oder Behältern von einem Punkt P zu einem Punkt P', eine Zone (2) mit bakteriologisch kontrollierter Atmosphäre, die sich wenigstens über den Abschnitt PP' erstreckt, Mittel (11) zum Aufbringen einer Beschichtung, die in Transportrichtung vor dem Punkt P angeordnet sind, fakultativ Mittel (13) zum Wiedergewinnen der Beschichtung, die in Transportrichtung hinter dem Punkt P' angeordnet sind, und Mittel zum Absetzen und Wiederabnehmen von zu transportierenden Produkten und/oder Behältern auf die bzw. von der Beschichtung.

9. Anlage nach Anspruch 8, **dadurch gekennzeichnet**, daß die Beschichtung eine filmbildende, sterilisierbare Lösung ist und daß die Mittel zum Aufbringen durch eine Pumpe und eine Breitschlitzdüse gebildet sind.

10. Anlage nach Anspruch 9, **dadurch gekennzeichnet**, daß die Mittel zum Wiedergewinnen in Transportrichtung hinter dem Punkt P' durch Mittel zum Schälen, zum Schaben oder zum Trennen gebildet sind.

11. Anlage nach Anspruch 8, **dadurch gekennzeichnet**, daß die Mittel zum Wiedergewinnen der Beschichtung, die durch einen mehrschichtigen Film mit einer sterilen oder beinahe sterilen Trennungsfläche gebildet ist, aufweisen eine Walze (13), die in Transportrichtung vor dem Punkt P angeordnet ist und den Teil der Beschichtung wiedergewinnt, der oben auf der sterilen oder beinahe sterilen Trennungsfläche angeordnet ist, und eventuell eine Walze (12), die in Transportrichtung hinter dem Punkt P' angeordnet ist und den Teil der Beschichtung wiedergewinnt, der zwischen der sterilen oder beinahe sterilen Trennungsfläche und der Aufnahmeseite des Fördermittels (1) angeordnet ist.

## Claims

1. A continuous ultraclean method of transporting products and/or containers from a point P to a point P' within a bacteriologically controlled area by means of a conveyor, characterized in that upstream of point P the receiving surface of the conveyor is continuously covered with a solid overlay of which that face intended to come into contact with the products and/or containers is sterile or virtually sterile, in that the products and/or containers are set down at point P within the bacteriologically controlled area in order to be transported on the said overlay and the said products and/or containers are then retrieved at point P' within the said area.

2. A method as claimed in Claim 1,
characterized in that downstream of point P' the overlay of the conveyor's receiving surface is removed, retrieved or recycled by mechanical, chemical, thermal or other means.

3. A method as claimed in either of Claims 1 or 2,
characterized in that the receiving surface of the conveyor is covered with a multi-layered overlay of which at least one of the interfaces between any two adjacent layers is sterile or virtually sterile.

4. A method as claimed in either of Claims 1 or 2,
characterized in that the conveyor's product-receiving surface is covered with an overlay which forms a film obtained by solidifying a film-forming material or solution prepared and applied in sterile or near-sterile conditions.

5. A method as claimed in any of Claims 1, 2 and 4,
characterized in that the overlay removed downstream of point P' is treated in order to be re-applied upstream of point P.

6. A method as claimed in Claim 5,
characterized in that this treatment includes cutting or grinding, melting or refluidization, filtration and sterilization steps, so that the overlay may be transformed from a solid into a liquid state and decontaminated.

7. A method as claimed in any of Claims 1, 2 and 3,
characterized in that the part of the overlay set above the sterile or virtually sterile interface of the multi-layered overlay is retrieved upstream of point P.

8. An installation for the implementation of the method in accordance with Claims 1 to 7,
characterized in that it comprises a conveyor (1) for transporting products and/or containers from a point P to a point P', an area (2) with a bacteriologically controlled atmosphere located at least along the section PP', means (11) for applying an overlay which are located upstream of point P, optionally means of retrieving (13) the said overlay which are located downstream of point P', and means for setting down and retrieving the products and/or containers to be transported on the said overlay.

9. An installation as claimed in Claim 8,
characterized in that the overlay is a sterilisable film-forming solution and that the means of application are comprised of a pump and a sheet die.

10. An installation as claimed in Claim 9,
characterized in that the means of retrieval downstream of point P' are comprised of peeling, scraping or separating means.

11. An installation as claimed in Claim 8,
characterized in that the means of retrieving the overlay made up of a multi-layered film with sterile or virtually sterile interface comprise a roller (13) located upstream of point P which retrieves the part of the overlay set above the sterile or virtually sterile interface and possibly a roller (12) located downstream of point P' which retrieves the part of the overlay set between the sterile or virtually sterile interface and the receiving face of the conveyor (1).
